# EUROPEAN PATENT SPECIFICATION

(11) **EP 0 725 491 B1**
(45) Date of publication and mention of the grant of the patent: **23.06.1999**
(21) Application number: 96200955.1
(22) Date of filing: 31.03.1993
(51) Int. Cl.: H04B 1/20, H04N 5/765

(54) **Video communication for interconnecting appliances that communicate using a control signal**
Videosystem zum Verbinden von Kommunikationsgeräten unter Verwendung eines Steuersignals
Système vidéo pour interconnecter des appareils de communication en utilisant un signal de commande

(30) Priority: 08.04.1992 EP 92201003
(43) Date of publication of application: 07.08.1996
(62) Divisional of application: 93200920.2
(73) Proprietor: Koninklijke Philips Electronics N.V., 5621 BA Eindhoven (NL)
(72) Inventor: Spiero, Richard Cees, 5656 AA Eindhoven (NL); Douglas, Terence Alan, 5656 AA Eindhoven (NL); Vlot, Marnix Claudius, 5656 AA Eindhoven (NL)
(74) Representative: van der Kruk, Willem Leonardus

(56) References cited:
- EP-A- 0 360 338
- EP-A- 0 371 749
- EP-A- 0 423 739
- EP-A- 0 432 316
- GB-A- 2 166 328
- GB-A- 2 204 755
- US-A- 4 337 480

## Description

### A

The invention relates to a video system comprising a first apparatus and a second apparatus and a signal bus, the first apparatus having connector means comprising a video signal output terminal for providing a video signal to a first video signal path on the signal bus and comprising a control signal terminal for conveying a digital control signal over the signal bus, the second apparatus having connector means comprising a video signal input terminal for receiving a video signal from said first video signal path on the signal bus and comprising a control signal terminal for conveying a digital control signal over the signal bus, at least one of said apparatuses being capable of acting as an initiator and being adapted for initiating a message frame, comprising a start bit and message bits, that can be conveyed by said control signal over the signal bus, and at least one other of said apparatuses being capable of acting as a responder and being adapted for responding to said message frame. The invention further relates to an apparatus for use in such a video system.

Such apparatuses can be used in combination so as to form a video system in which a signal path is realized for transmitting a video signal from one apparatus to another. The connector means of a first apparatus in the system are coupled to the connector means of a second apparatus in the system. The system can be expanded so as to form a chain of apparatuses if an apparatus comprises second connector means, and the second connector means of the apparatus are coupled to the (first) connector means of a subsequent apparatus in the chain. The system can further be expanded by realizing a second video signal path. The signal path formed by the connections of the video signal output terminal of the first connector means to the video signal input terminal of the second connector means of the apparatuses in the chain is called the 'up' path. The signal path formed by the connections of the video signal output terminal of the second connector means to the video signal input terminal of the first connector means of the apparatuses in the chain is called the 'down' path.

The connector means are preferably in the form of a SCART connector. This means that the apparatuses are interlinked by means of SCART cables. The control signal terminals in the connector means of the apparatuses are in that case the pins with number 10 in the SCART connectors.

It should be noted that SCART connectors and cables are well known in the art, see the magazine Funk-Technik 38(1983), heft 5, pp. 208-212.

The termination of the chain at the 'up' side can be realized by a television apparatus, provided with a single connector means. In the same way one further apparatus having a single connector means, preferably a videorecorder, can be connected to the 'down' end of the chain.

The video signal transported via a path, such as the 'up' path can have various formats, such as CVBS, Y/C or RGB. The transmission of a CVBS video signal requires only one signal line relative to ground. The transmission of the Y/C video signal requires two signal lines, and the transmission of an RGB signal requires three signal lines relative to ground. The 'up' path, which realizes the signal transmission towards the television apparatus has the possibility of transmitting either one of the three video signal formats mentioned above, that is CVBS via line 19 in the SCART cable, Y and C via the lines 19 and 15 respectively, and R,G and B via the lines 15, 11 and 7 respectively.

The 'down' path realizes the signal transmission towards the videorecorder, and realizes a video signal transmission of either the CVBS or the Y/C format. CVBS is transmitted via the line 20 in the SCART cable, and Y and C are transmitted via the lines 20 and 7 respectively.

It should thus be noted that a signal input or output terminal does not necessarily mean a single input or output terminal, but can each comprise one, two or three subterminals, dependent of the signal format (or formats) that should be transmitted via the 'up' and 'down' path.

### B

A video system of the type set forth in the preamble is known, for example, from the European Patent Specification 0 437 882 B1 (PHN 13215). In that patent specification, a video system is disclosed which makes use of a control signal for establishing the common video signal formats, such as the RGB and the Y/C format, that can both be provided by the video signal generating device and be accepted by the video signal receiving device.

### C

It is an object of the present invention to provide an improved communication between the apparatuses.

The video system according to the present invention is characterized in that said Initiator comprises means for:
- testing whether the control signal is in the active state or in the passive state and initiating a message frame after the control signal has been in the passive state for at least a first predetermined period of time,
- generating a start bit by pulling the control signal to the active state for a second period of time indicative for the start bit, and releasing the control signal after said second period of time thereby allowing it to return to the passive state,
- verifying the state of the control signal after said second period of time,
- generating a message bit by producing a first or a second pulse shape in the control signal, said first pulse shape being produced such that it can be changed into the second pulse shape by the Responder,
and in that said Responder comprises means for:
- validating a start bit by testing the control signal for being in the active state for a period of time corresponding to said second period of time,
- ignoring the rest of a message frame if the Responder failed to validate the start bit of said message frame,
- detecting a message bit,
- converting a message bit by changing its pulse shape in the control signal from the first pulse shape, as produced by the Initiator, to the second pulse shape.

Communication using the control signal is initiated by one of the apparatuses generating a start bit and subsequently generating one or more message bits. An apparatus that intends to initiate a communication via the control signal is called an Initiator. In order to become an Initiator, an apparatus must first test that the control signal on the signal bus is free for use. That is, the control signal must be in the passive state (such as 'high') for a certain minimum period of time. Then the Initiator starts a message frame by generating the start bit. That is, it pulls the control signal to the active state (such as 'low') and releases the control signal after a specific period of time, thereby allowing it to return to the passive state. The pulse shape of the start bit is unique for the purpose of identifying the start of a message frame. The start bit is followed by a series of message bits.

Apparatuses that respond to these bits from an Initiator are called Responders. There can be more than one Responder at a time. Responders can convert message bits generated by the Initiator, in order to enforce their own data onto the control signal on the signal bus, instead of the data from the Initiator. Message bits that are intended to be converted, where appropriate, by a Responder are called "arbitration-type" bits. Messages bits that are not intended to be converted by a Responder, i.e. their state is determined solely by the Initiator of the message, are called "flag-type" bits. Examples of both types of bits are described hereafter.

Failure to validate the start bit must result in a Responder ignoring the rest of the message frame.

A video system according to the present invention, whereby the connector means of the first apparatus further comprise a video signal input terminal for receiving a video signal from a second video signal path on the signal bus and the connector means of the second apparatus further comprise a video signal output terminal for providing a video signal to said second video signal path on the signal bus, may be further characterized in that said means for generating a message bit are adapted for generating a first message bit (DIR) which indicates whether the message frame relates to the video signal on the first or on the second video signal path, and in that said Responder is adapted for responding to the message frame if that Responder either is in the process of generating a video signal and providing it to the indicated video signal path, or is in the process of receiving a video signal from the indicated video signal path for displaying, recording and/or further processing. The DIR (direction) bit is a flag-type bit that is generated by the Initiator to indicate the signal path, the 'up' path, or the 'down' path, that is under control in the current message frame. This bit must be used by all active Responders; to participate in the communication an apparatus must be active on the signal path, i.e. in the direction 'up' or 'down', to which the message frame relates.

A video system according to the present invention may be further characterized in that said means for generating a message bit are adapted for generating a second message bit (PAS) by producing the first or the second pulse shape in the control signal; the second pulse shape is produced if said Initiator comprises a video signal source and is in the process of providing the video signal from its video signal source to the (indicated) video signal path, otherwise the first pulse shape is produced, and in that the Responder, if it comprises a video signal source, is adapted for converting said second message bit by changing its pulse shape in the control signal from the first pulse shape, as produced by the Initiator, to the second pulse shape if that Responder is in the process of providing the video signal from its video signal source to the (indicated) video signal path. The PAS (present active source) bit is an arbitration-type bit whose pulse shape is pulled down to a '0' bit by an active video signal source when that source is currently active in the direction as indicated by the preceding DIR bit. Only one source can be active in a particular direction (the 'up' or 'down' direction). Active Responders of the same direction must test and use this bit in the decision as to whether or not to use the subsequent signal quality data.

A video system according to the present invention may be further characterized in that said means for generating a message bit are adapted for generating a third message bit (NAS) indicating that the Initiator will soon start to provide the video signal from its video signal source to the (indicated) video signal path, and in that said Responder is adapted for discontinuing the process of providing the video signal from its video signal source to the (indicated) video signal path, in response to said third message bit. The NAS (new active source) bit is a flag-type bit that is generated by an Initiator which is intending to source its video signals onto the signal bus. When this bit is generated as a '0' bit, the present active source must respond by removing its video signals from the signal bus.

A video system according to the present invention may be further characterized in that said means for generating a message bit are adapted for generating a fourth message bit (DES) by producing the first or the second pulse shape in the control signal; the second pulse shape is produced if said Initiator is in the process of receiving the video signal from the (indicated) video signal path for displaying, recording and/or further processing, otherwise the first pulse shape is produced, and in that the Responder is adapted for converting said fourth message bit by changing its pulse shape in the control signal from the first pulse shape, as produced by the Initiator, to the second pulse shape if that Responder is in the process of receiving the video signal from the (indicated) video signal path for displaying, recording and/or further processing. The DES (destination) bit is an arbitration-type bit. Its pulse shape is pulled down to a '0' bit by all devices acting as active video signal destinations of the same direction. This bit must be a '0' bit in order to act on subsequent signal quality data.

A video system according to the present invention may be further characterized in that said means for generating a message bit are adapted for generating a message bit string (QTY) representing a plurality of video signal types and comprising at least one fifth message bit, for establishing which of said plurality of video signal types can be handled by both the apparatus that provides a video signal from its video signal source to the (indicated) video signal path and those video signal receiving apparatuses that display, record, and/or further process said video signal, the Initiator generating a fifth message bit by producing the first pulse shape in the control signal for a video signal type that it can handle and by producing the second pulse shape in the control signal for a type that it cannot handle, and in that said Responder is adapted for converting a fifth message bit which represents a video signal type that it cannot handle, by changing its pulse shape in the control signal from the first pulse shape, as produced by the Initiator, to the second pulse shape. The signal quality bits QTY are arbitration-type bits. Source and destination apparatuses will generate a '0' bit if a video signal with a certain signal quality, such as Y/C or RGB, or such as a wider picture aspect ratio, for instance 16:9, can not be generated or processed.

A video system according to the present invention may be further characterized in that said means for detecting a message bit are adapted for sampling the control signal a third predetermined period of time after said control signal has changed from the passive state to the active state, and in that said means for generating a message bit are adapted for producing said first pulse shape by pulling the control signal to the active state for a period of time which is shorter than said third predetermined period of time, and for producing said second pulse shape by pulling the control signal to the active state for a period of time which is longer than said third predetermined period of time. The starting point of a message bit is defined by its transition from the passive to the active state, produced by the Initiator. A message bit includes a transition from the active to the passive state, which occurs after a time interval that is either longer or shorter than a third predetermined time interval, depending on the message bit being a '0' bit or a '1' bit, respectively. An Initiator can enforce its own data onto the control signal on the signal bus by keeping the control signal in the active state during a time interval that is longer than the third predetermined time interval. Thus, the message bit in the control signal becomes a '0' bit instead of the bit that was produced by the Initiator.

For detecting whether a message bit is a '0' bit or a '1' bit, the control signal is sampled said third predetermined time interval after the starting point of the message bit.

An apparatus for use in a video system according to the present invention is characterized in that said apparatus is adapted for initiating a message frame that can be conveyed by a digital control signal over the signal bus ("Initiator") and/or characterized in that said apparatus is adapted for responding to a message frame that is conveyed by a digital control signal over the signal bus ("Responder"). The connector means of the apparatuses are preferably in the form of a SCART connector, whereby the control signal terminal is the pin number 10 in the SCART connector. Thus, an Initiator and a Responder can be coupled by using a SCART cable as the signal bus.

The apparatus according to the invention can be provided with a controller and an input-output circuit, the input-output circuit comprising a first terminal coupled to the control signal terminal comprised in the connector means of the apparatus, an input terminal coupled to an output of the controller, and an output terminal coupled to an input of the controller, the input-output circuit further comprises first low pass filter means coupled between the input terminal and the first terminal, and a diode coupled between the first terminal and a first point of constant potential. The control signal processing means comprise the controller and the input-output circuit that realizes an improved coupling of the controller in the control signal processing means to the line 10 of the SCART cable.

These and other aspects of the invention will be apparent from and elucidated with reference to the embodiment(s) described hereinafter.

### D

The invention will now be described in more detail, by way of example, with reference to the accompanying drawings, in which
Figure 1, 2a, 2b and 3 show a number of situations in which an interconnection system of a number of videoapparatuses connected in a chain can be used,
Figure 4 shows an embodiment of the control signal processing means in the apparatus,
Figure 5 shows the message frame generated on the line 10 of the SCART cable,
Figure 6 shows the various bit formats for the bits in the message frame of Figure 5,
Figure 7 shows the interaction of an Initiator and a Responder on the line 10 of the SCART cable,

### E

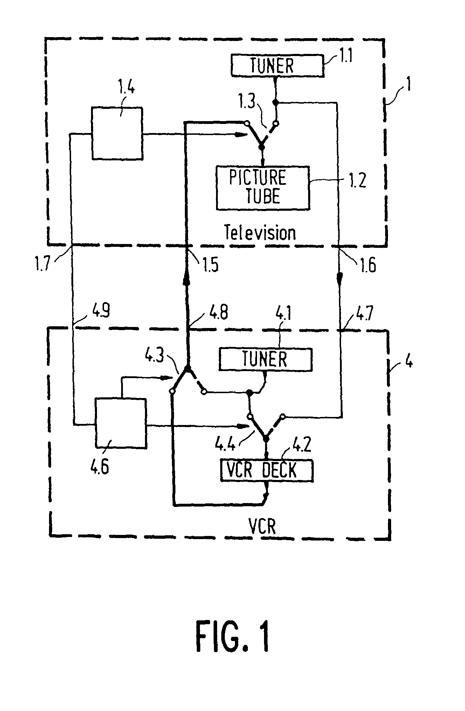

Figure 1 shows an interconnection system for two videoapparatuses, such as a television apparatus 1 and a videorecorder 4. The television apparatus 1 includes a tuner 1.1, a picture tube 1.2, a source selector switch 1.3 and control signal processing means 1.4. The television apparatus 1 further comprises connector means, preferably in the form of a SCART connector, having a signal input terminal 1.5, a signal output terminal 1.6 and a control signal terminal 1.7.

The videorecorder 4 comprises a tuner 4.1, a VCR deck 4.2, selector switches 4.3 and 4.4 and control signal processing means 4.6. The videorecorder 4 further comprises first connector means, preferably in the form of a SCART connector, having a signal input terminal 4.7, a signal output terminal 4.8 and a control signal terminal 4.9.

The position of the selector switch 1.3 in the television apparatus 1 is electrically controllable by means of a switching signal generated by the control signal processing means 1.4. The positions of at least the selector switch 4.3 in the videorecorder 4 is electrically controllable by means of switching signals generated by the control signal processing means 4.6. The position of the selector switch 4.4 can be controlled either manually or electrically by means of a switching signal generated by the control signal processing means 4.6.

The electrical line in the SCART cable connecting the control signal terminals 1.7 and 4.9 is line number 10 in that cable. The relevant terminals are thus in fact the pins number 10 in the SCART connectors.

Figure 1 shows the connections for watching a program that is being played by the VCR. The pertinent signal connection is the connection from the VCR deck 4.2 to the picture tube 1.2, which implies that the selector switches 4.3 and 1.3 are in the position as shown, so that the video signal, supplied by the videorecorder apparatus 4 at its signal output terminal 4.8 is received by the television apparatus 1 at its signal input terminal 1.5 and coupled to the picture tube 1.2.

The signal path that is the most important for the specific mode is shown as a bold line. Signal paths of lesser significance are shown in medium bold lines, and the other paths that are non-relevant for the specific mode are shown in thin lines.

Figure 1 shows the situation after the video recorder 4 has been switched to reproduction. Switching the videorecorder to reproduction is detected by the control signal processing means 4.6, which supply switching signals to the selector switch 4.3 so as to position it in the position as shown. The signal reproduced is thus available at the signal output 4.9 of the VCR 4. The control signal processing means 4.6 further generate a control signal at the control signal terminal 4.9, which control signal is thus supplied to the television apparatus 1. Upon receipt of the control signal by the control signal processing means 1.4 in the television apparatus 1, the control signal processing means generate a switching signal which is supplied to the selector switch 1.3, under the influence of which the switch 1.3 is positioned in the position as shown. The signal reproduced by the videorecorder 4 can thus be displayed on the tube 1.2 of the television apparatus 1.

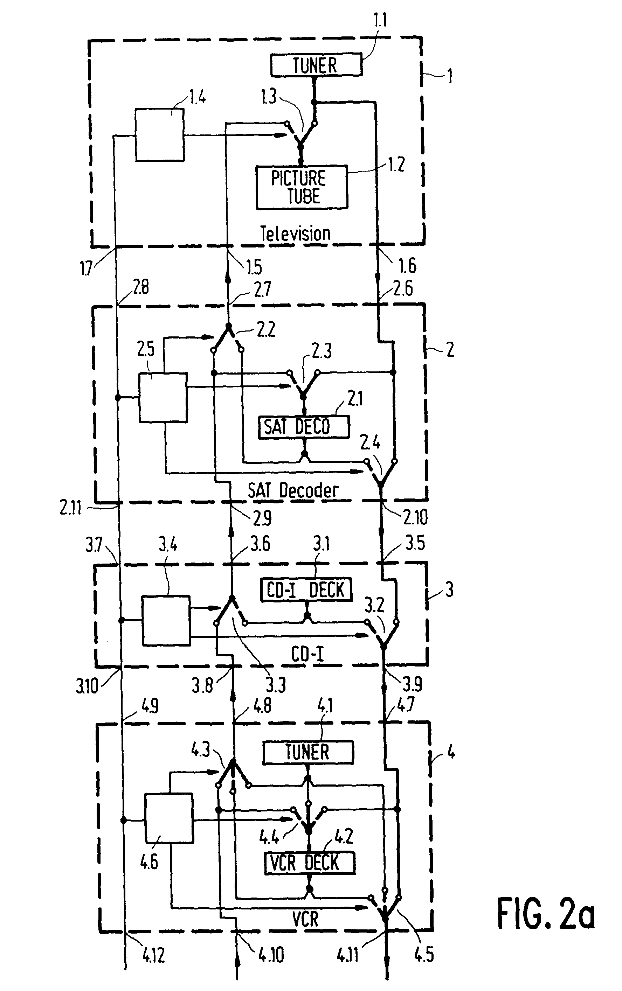

Figure 2a shows an interconnection system for a number of videoapparatuses, such as a television apparatus 1, a satellite decoder apparatus 2, a CD-I player 3 and a videorecorder 4. The television apparatus 1 includes a tuner 1.1, a picture tube 1.2, a source selector switch 1.3 and control signal processing means 1.4. The television apparatus 1 further comprises connector means, preferably in the form of a SCART connector, having a signal input terminal 1.5, a signal output terminal 1.6 and a control signal terminal 1.7.

The satellite decoder apparatus 2 comprises a satellite decoder 2.1, selector switches 2.2, 2.3 and 2.4, and control signal processing means 2.5. The decoder apparatus 2 further comprises first connector means, preferably in the form of a SCART connector, having a signal input terminal 2.6, a signal output terminal 2.7 and a control signal terminal 2.8, and comprises second connector means, preferably in the form of a SCART connector, having a signal input terminal 2.9, a signal output terminal 2.10 and a control signal terminal 2.11. The control signal terminals 2.8 and 2.11 are interconnected.

The CD-I player 3 comprises a CD-I deck 3.1, selector switches 3.2 and 3.3 and control signal processing means 3.4. The CD-I player 3 further comprises first connector means, preferably in the form of a SCART connector, having a signal input terminal 3.5, a signal output terminal 3.6 and a control signal terminal 3.7, and comprises second connector means, preferably in the form of a SCART connector, having a signal input terminal 3.8, a signal output terminal 3.9 and a control signal terminal 3.10. The control signal terminals 3.7 and 3.10 are interconnected.

The videorecorder 4 comprises a tuner 4.1, a VCR deck 4.2, selector switches 4.3, 4.4 and 4.5 and control signal processing means 4.6. The videorecorder 4 further comprises first connector means, preferably in the form of a SCART connector, having a signal input terminal 4.7, a signal output terminal 4.8 and a control signal terminal 4.9, and comprises second connector means, preferably in the form of a SCART connector, having a signal input terminal 4.10, a signal output terminal 4.11 and a control signal terminal 4.12. The control signal terminals 4.9 and 4.12 are interconnected.

The position of the selector switch 1.3 in the television apparatus 1 is electrically controllable by means of a switching signal generated by the control signal processing means 1.4. The positions of at least the selector switches 2.2 and 2.4 in the satellite decoder apparatus 2 are electrically controllable by means of switching signals generated by the control signal processing means 2.5. The position of the selector switch 2.3 can be controlled either manually or electrically by means of a switching signal generated by the control signal processing means 2.5. The positions of the selector switches 3.2 and 3.3 in the CD-I player 3 are electrically controllable by means of switching signals generated by the control signal processing means 3.4. The positions of at least the selector switches 4.3 and 4.5 in the videorecorder 4 are electrically controllable by means of switching signals generated by the control signal processing means 4.6. The position of the selector switch 4.4 can be controlled either manually or electrically by means of a switching signal generated by the control signal processing means 4.6.

Identical apparatuses as the apparatuses 2, 3 and 4 described above, for instance a second videorecorder identical to the videorecorder 4, can be connected to the second connector means of the videorecorder 4.

The electrical line in the SCART cable connecting the control signal terminals 1.7 and 2.8, 2.11 and 3.7, 3.10 and 4.9 is line number 10 in that cable. The relevant terminals are thus in fact the pins number 10 in the SCART connectors.

Figure 2a shows the simplest connection. The only pertinent signal connection is the internal connection from the tuner 1.1 to the picture tube 1.2. All other apparatuses are in the standby mode, which implies that the selector switches 2.4, 3.2 and 4.5 are in the position as shown, so that the tuner signal, supplied by the television apparatus 1 at its signal output terminal 1.6 is looped through in downwards direction, so that, if needed, it can be recorded by the videorecorder 4, if its selector switch 4.4 is its correct position, namely to the right.

The signal path that is the most important for the specific mode is shown as a bold line. Signal paths of lesser significance are shown in medium bold lines, and the other paths that are non-relevant are shown in thin lines.

If the user decides to record the TV program supplied by the television apparatus, he positions the selector switch 4.4 in its right position, so that the signal input terminal 4.7 is coupled to the input of deck 4.2. The switching in of the recording mode in videorecorder 4 is detected by the control signal processing means 4.6. Upon detection of this switching in of the recording mode, it generates a control signal which is supplied via the output 4.9 to the other apparatuses. Upon receipt of this control signal by the control signal processing means 2.5 and 3.4, those means are disabled to control the selector switches 2.4 and 3.2 respectively. The connection from the signal output 1.6 of the television apparatus downwards to the signal input 4.7 of the videorecorder 4 is thus maintained, and protected against disconnection upon switching either one of the apparatuses 2 or 3 from the standby mode in its switched-on mode.

Suppose that, while watching the TV program, the user decides to record another program. The user thus selects by means of the selector switch 4.4 the output of tuner 4.1 which supplies the other TV program. The control signal processing means 4.6 detect the switching in of the recording mode of the videorecorder and subsequently generate a switching signal for the selector switch 4.3 so as to position the switch 4.3 so, that the output of the tuner 4, is coupled to the signal output terminal 4.8. The TV program being recorded can thus be checked by switching the switch 1.3 to the other position.

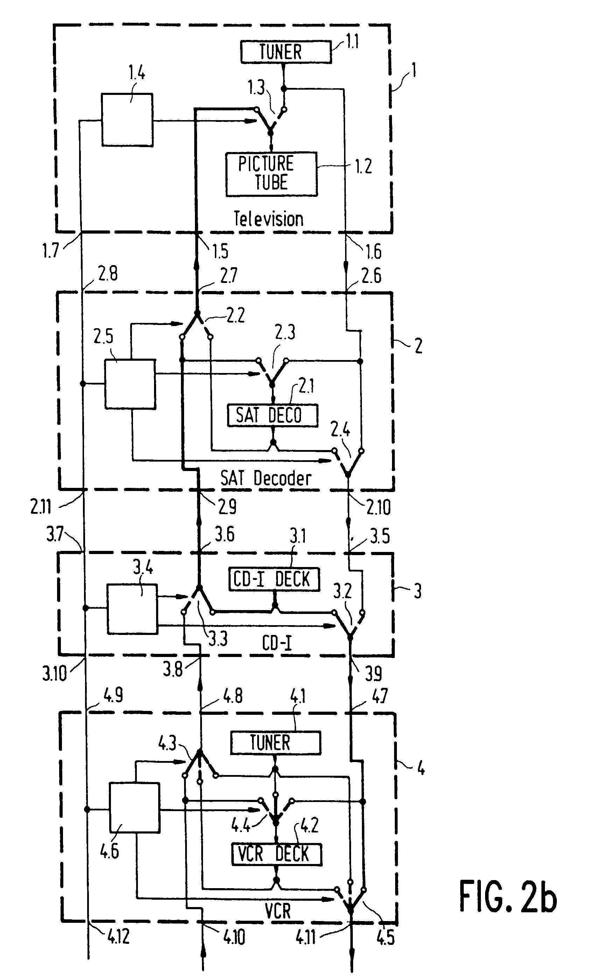

Figure 2b shows, when starting from the situation as shown in Figure 2a, the situation where the CD-I player 3 is switched to reproduction. Switching the CD-I player to reproduction is detected by the control signal processing means 3.4, which supply switching signals to the selector switches 3.2 and 3.3 so as to position them in the position as shown. The signal reproduced is thus available at the signal outputs 3.6 and 3.9 of the player 3. The control signal processing means 3.4 further generate a control signal at the control signal terminals 3.7 and 3.10, which control signal is thus supplied to all other apparatuses connected in the chain. Upon receipt of the control signal by the control signal processing means 1.4 in the television apparatus 1, these means generate a switching signal which is supplied to the selector switch 1.3, under the influence of which the switch 1.3 is positioned in the position as shown. The signal reproduced by the CD-I player 3 can thus be displayed on the tube 1.2 of the television apparatus 1 and recorded by the videorecorder 4, if needed.

Recording the signal supplied by the CD-I player 3 means that the user selects the signal to be recorded by means of selector switch 4.4, by positioning the switch 4.4 in its right position, so that the signal input terminal 4.7 is coupled to the input of deck 4.2.

In the same way as has been said above with reference to Figure 2a, in relation to the recording of a TV program supplied by the television apparatus 1 by the videorecorder 4, it should be mentioned here that, the position of the switch 3.2 is protected, so that the connection between the output of CD-I deck 3.1 and the input of VCR deck 4.2 is maintained as long as recording continues.

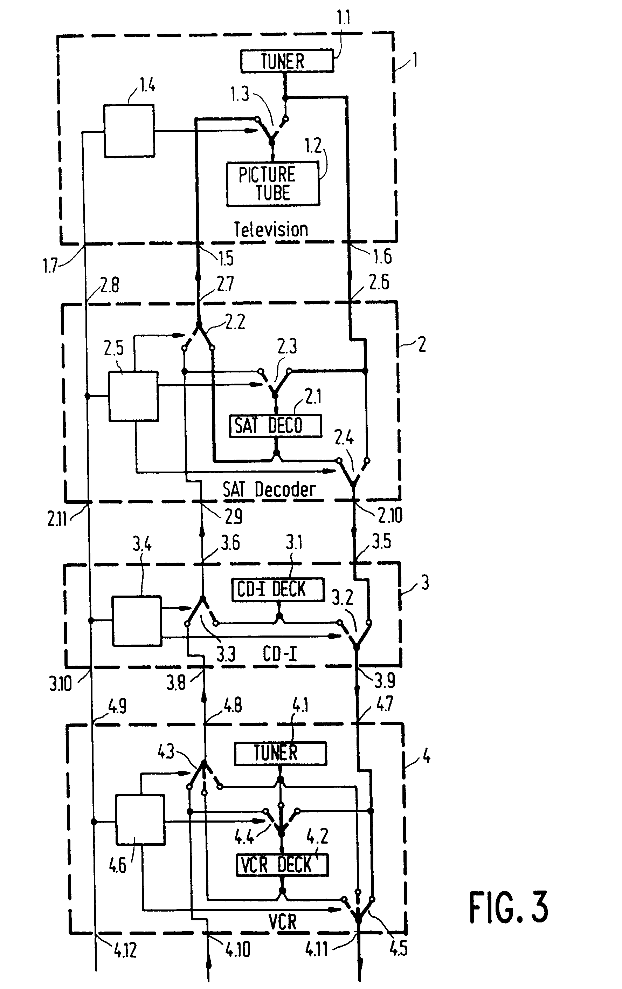

Figure 3 shows, when starting from the situation as shown in Figure 2a, the situation where the satellite decoder apparatus 2 is switched on. When the decoder apparatus 2 is switched on, the user must select whether the signal from the terminal 2.6 or from the terminal 2.9 should be decoded. In the case where watching is the prime intent, i.e. the television's tuner 1.1 is used, the signal input 2.6 is selected by means of the selector switch 2.3. Switching the satellite decoder apparatus on, is detected by the control signal processing means 2.5, which supply switching signals to the selector switches 2.2 and 2.4 so as to position them in the position as shown. The decoded signal is thus available at the signal outputs 2.7 and 2.10 of the decoder apparatus 2. The control signal processing means 2.5 further generate a control signal at the control signal terminals 2.8 and 2.11, which control signal is thus supplied to all other apparatuses connected in the chain. Upon receipt of the control signal by the control signal processing means 1.4 in the television apparatus 1, these means generate a switching signal which is supplied to the selector switch 1.3, under the influence of which the switch 1.3 is positioned in the position as shown. The decoded signal supplied by the decoder apparatus 2 can thus be displayed on the tube 1.2 of the television apparatus 1 and recorded by the videorecorder 4, if needed.

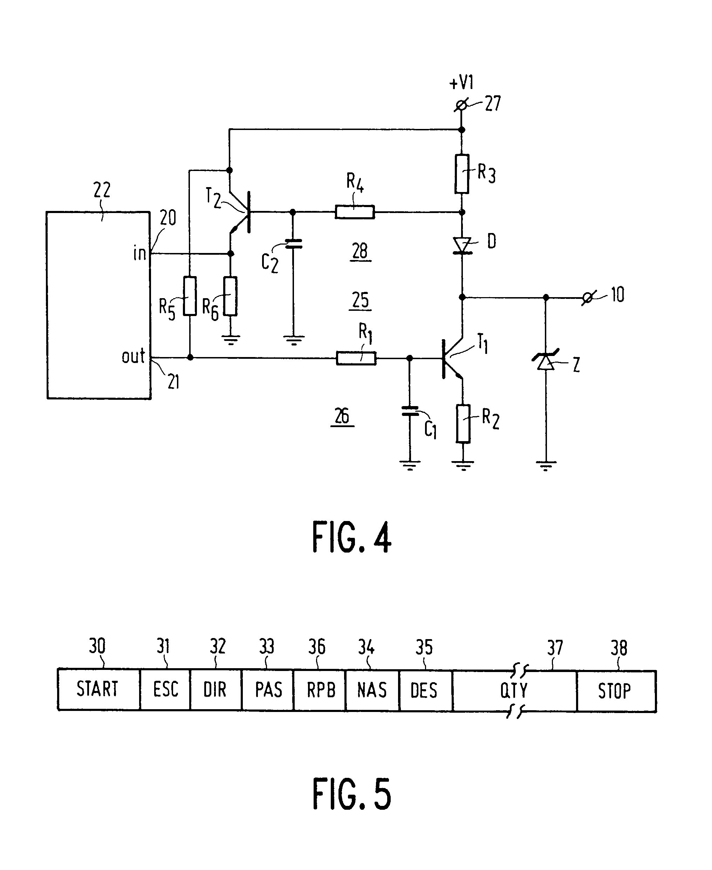

Figure 4 shows an embodiment of the control signal processing means 1.4, 2.5, 3.4 or 4.6, which are all of the same construction. The terminal 10, which should be coupled to pin 10 of the SCART cable, is coupled to an input 20 and an output 21 of a controller 22 via an input-output circuit 25. The controller 22 can be a microcontroller of the 8051 IC family, described in Philips components data handbook 1989, IC14 on microcontrollers NMOS, CMOS, such as the PCB80C51BH-3, see page 177 and on in the said data handbook.

The output 21 of the microcontroller 22 is coupled to the pin 10 via a lowpass filter 26, comprising the resistor R₁ and the capacitor C₁, and an amplifier, comprising the transistor T₁. The emitter of the transistor T₁ is coupled to a point of constant potential, which is earth, via a resistor R₂ of low resistive value. The collector of the transistor T₁ is coupled to terminal 10, via a zener diode Z to the said point of constant potential (earth), and via a series connection of a diode D and a resistor R₃ to an other point 27 of constant potential, which is a positive voltage v₁ of eg. 5 Volts.

The terminal 10 is coupled to the input 20 of the microcontroller 22 via the diode D, a lowpass filter 28 comprising a resistor R₄ and a capacitor C₂, and an amplifier, comprising the transistor T₂. The collector of the transistor T₂ is coupled to the point 27 of constant potential, which point is further coupled to the input 21 of the microcontroller 22 via a resistor R₅. The emitter of the transistor T₂ is coupled to the input 20 of the microcontroller 22 and via a resistor R₆ to earth.

The line 10 in the SCART cable interconnecting the apparatuses is a single communication bus between the apparatuses which operates in a 'wired-and' configuration, where each apparatus contains a pull-up resistor, which is the resistor R₃ in Figure 4 connected to the positive voltage at point 27. Communication on the bus is initiated by an apparatus pulling the bus low. Pulling the bus low is realized by the microcontroller 22 by switching the voltage at the output 21 to 'high', which equals a voltage of 5 Volts. The presence of the lowpass filter 26 means that a gradual change from the 'high' state to the 'low' state at the terminal 10 takes place. The inclusion of the lowpass filter 26 is necessary in order to prevent high frequency crosstalk signals from occurring on the lines in the SCART cables carrying the video and audio signals. In the absence of the lowpass filter 26, the signal transitions from the 'high' to the 'low' state, or vice versa, at the output 21 would result in high currents at the terminal 10, causing the crosstalk signals to occur. The lowpass filter 26 filters out the high frequency components in the signal transitions, so that they do not appear at the terminal 10.

The input 20 senses the signal present at the terminal 10, in order to receive a message from another apparatus. The lowpass filter 28 prevents impulsive noise present on the terminal 10 from being detected, erroneously, by the microcontroller as messages from other apparatuses. The lowpass filter 28 may as well be realized in software in the controller 22.

The zenerdiode might be included so as to obtain a further protection against the occurrence of impulsive disturbances on the earth connection in the SCART cable, which disturbances can be the result of static discharges that occurred in eg. the television apparatus.

The diode D is needed in order to isolate the terminal 10 from earth, if the apparatus incorporating the control signal processing means of Figure 4 is switched off.

The diode D and the transistor T₂ should be chosen such that their threshold values are substantially equal, so that the voltages at terminal 10 and the input 20 are substantially equal.

Communication over the line 10 could take place in the way as described in European patent application 437,882 A1 (PHN 13215), see especially the description relating to Figure 3 in the said application. Another way of communicating over the line 10 will be described hereafter.

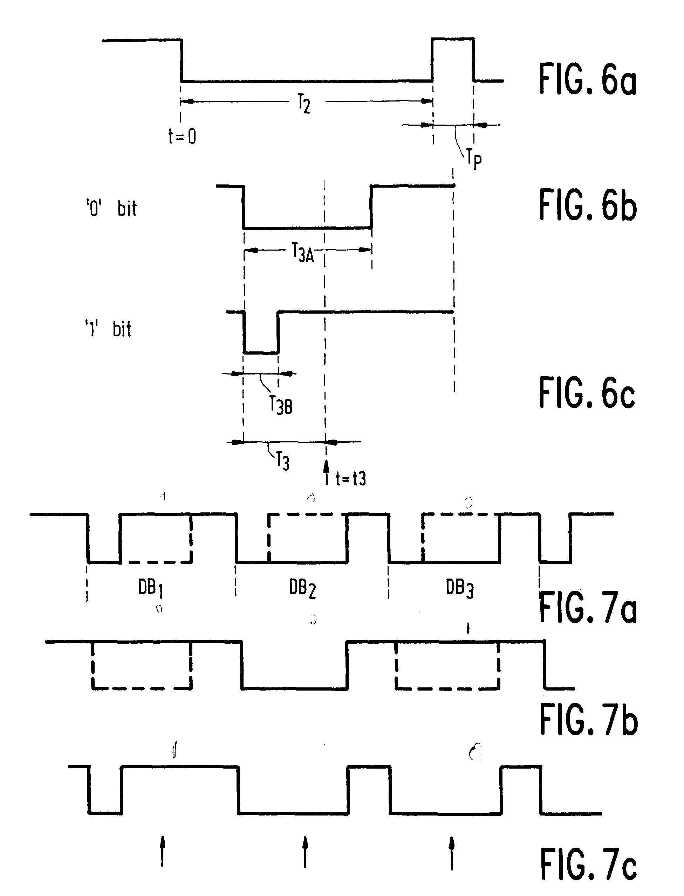

Communication on line 10 is initiated by an apparatus pulling the control signal 'low' and subsequently generating a message frame, pulse coded as shown in Figure 5. The message frame of Figure 5 comprises a start bit 30, an escape bit ESC 31, a direction bit DIR 32, a PAS bit 33, a NAS bit 34, a destination bit DES 35, a record protect bit RPB 36, a number of quality bits QTY 37 and a stop bit 38. The pulse formats of all the bits, except for the start, and possibly the stop bit, are identical. The start bit has a pulse shape as shown in Figure 6a. The other bits can be a 'zero' ('0') bit, or a 'one' ('1') bit. The pulse shapes of the '0' and '1' bits are shown in Figure 6b and 6c respectively.

An apparatus that intends to initiate a communication via line 10 is called an Initiator. In order to become an Initiator, an apparatus must first test that line 10 is free for use. That is, the line must be 'high' for a certain minimum period of time. Then the Initiator starts a message by generating the start bit. That is, it pulls the control signal low at time t=0 in Figure 6a, and releases the control signal after a specific period of time T₂, thereby allowing it to return to the high state. The state of the control signal is verified after the period of time T₂. The pulse shape of the start bit is unique for the purpose of identifying the start of a message frame. The start bit is followed by a series of message bits whose starting point is defined by subsequent high-to-low transitions. The message bits include a low-to-high transition which occur a time interval T_{3A} or T_{3B} after the high-to-low transition, dependent whether the message bit is a '0' bit or a '1' bit respectively, see Figure 6b and 6c.

Apparatuses that respond to these bits from an Initiator are called Responders. There can be more than one Responder at a time. The sampling instant for detecting whether a message bit is a '0' bit or a '1' bit is at t=t₃ in the Figures 6b and 6c. Responders can convert message bits as shown in Figure 7. Figure 7a shows the pulse shapes produced by the Initiator, generating three message bits DB₁, DB₂ and DB₃, being a '1' bit, a '0' bit and a '0' bit, respectively. Figure 7b shows the Responder's output signal. From Figure 7b it can be seen that a Responder leaves the line 10 high for a '1' bit while a '0' bit is generated by pulling the line 10 low immediately after the high-to-low transition from the Initiator. Figure 7c shows the resulting signal on line 10. The arrows show the time instants for detecting the message bits by an apparatus connected to line 10.

Failure to validate the start bit must result in a Responder ignoring the rest of the message frame.

The ESC bit 31 is generated only by the Initiator and must be a logical zero to indicate that the following data is of the contents and the format as described above.

The DIR bit 32 is generated by the Initiator to indicate the signal path, the 'up' path, or the 'down' path, that is under control in the current message frame. This bit must be used by all active Responders: to participate in the communication an apparatus must be active on the signal path, i.e. in the direction 'up' or 'down', to which the message frame relates.

The PAS (present active source) bit 33 is a bit whose pulse shape is pulled down to a '0' bit by an active signal source when a source is currently active in the direction as indicated by the preceding DIR bit. Only one source can be active in a particular direction (the 'up' or 'down' direction). Active Responders of the same direction must test and use this bit in the decision as to whether or not to use the subsequent signal quality data.

The NAS (new active source) bit 34 is a bit whose pulse shape is pulled down to a '0' bit by an Initiator that is intending to source its video signals onto the SCART interconnection. When this bit is a '0' bit, the current active source must respond by removing its video signals.

The RPB (record protect) bit 36 is an arbitration-type bit, as explained with reference to Figure 7. Its level is normally '1' if the signal path indicated by the DIR bit is free to use. However, the signal path can be in use by at least two apparatuses cooperating together over the said signal path in order to record a signal, that is a videorecorder and eg. a video signal source such as a CD-I player. In that situation the signal path will be record protected, which means that the signal path is protected against an interference by a new active source. The RPB bit will be pulled down now to a '0' bit by one of the at least two active apparatuses that communicate with each other over the signal path in question.

The DES (destination) bit 35 is also an arbitration-type bit. Its pulse shape is pulled down to a '0' bit by all devices acting as active video signal destinations of the same direction. This bit must be a '0' bit in order to act on subsequent signal quality data.

The signal quality bits QTY 37 are arbitration-type bits. Source and destination apparatuses will generate a 'low' bit if a video signal with a certain signal quality, such as Y/C or RGB, or such as a wider picture aspect ratio, for instance 16:9, can not be generated or processed.

The response of the control signal processing means (1.4, 2.5, 3.4, 4.6) will be explained hereafter, with reference to Figure 2b. In response to switching the CD-I player to reproduction, the control signal processing means 3.4 generate a message frame as discussed above at the terminal 10. The message frame should indicate that a new source wants to become active. Further the message frame indicates in which direction (in upwards direction: the DIR bit is a '1' bit, or downwards direction: the DIR bit is a '0' bit) the new source wants to supply its signal. The control signal processing means 3.4 test whether the RPB bit (record protect bit) 36 for the specified direction is pulled low by an apparatus which is active in the chain. Such an already active apparatus can be a videorecorder which records a signal supplied by an other active source which supplies a signal in that same direction to the videorecorder. If a 'low' RPB bit is detected for the specified direction (let us assume that this is the upwards direction), the control signal processing means 3.4 do not generate a switching signal to the switch 3.3, so that the switch 3.3 remains in the position in which it couples input 3.8 to output 3.6.

In response to the RPB bit being a '0' bit, or because the control signal processing means 3.4 is adapted to automatically generate two message frames, one in each direction, the control signal processing means 3.4 could generate a new message frame for the other direction (downwards), in order to determine the possibilities of supplying the signal in the downwards direction.

If no RPB bit being 'zero' has been detected for a specified direction, the control signal processing means 3.4 generate a switching signal to at least the switches 3.2 or 3.3 for the specified direction, so as to enable the signal supplied by the apparatus to be transported in upwards and/or downwards direction to a destination apparatus. The NAS bit will become 'zero'.

It should be noted that European Patent Application EP 0 565 170 discloses an adapter apparatus for application in a chain construction as shown in the Figures 2a, 2b and 3. The adapter apparatus is equally well applicable in a combination of two video apparatuses that are coupled to each other via a SCART cable, where both apparatuses are provided with a single SCART connector only, as shown in Figure 1. It is also possible to include the adapter apparatus in any audio or video signal source or receiver, in order to improve the interconnection possibilities. The adapter apparatus could eg. be applied in a television apparatus, such as the television apparatus 1 in Figure 1.

The invention thus relates to a video system comprising at least two apparatuses that are coupled by a signal bus. The signal bus is preferably a SCART cable, which can convey video signals in two directions and control signals. The control signals can be conveyed by line 10 of the SCART cable. The communication between the apparatuses is initiated by one of the apparatuses acting as an Initiator by generating a message frame. The other apparatuses respond to the message frame, i.e. they act as Responders. The message frame comprises a start bit and message bits. The pulse shape of the start bit is characteristic for the start bit. The pulse shape of a message bit can be a first pulse shape for a '1' bit or a second pulse shape for a '0' bit. The first pulse shape is produced by the Initiator in such a way that it can be changed by a Responder to the second pulse shape, thus converting a '1' bit in the control signal to a '0' bit. The Responders are adapted for converting a message bit by changing its pulse shape in the control signal from the first pulse shape, as produced by the Initiator, to the second pulse shape.

The invention thus further relates to an input-output circuit that can be used in the control signal processing means in the apparatus. The input-output circuit can be coupled to the control signal terminal comprised in the connector means of the apparatus and to a controller, thus realizes an improved coupling of the controller in the control signal processing means to the line 10 of the SCART cable.

## Claims

1. Video system comprising a first apparatus (1) and a second apparatus (4) and a signal bus, the first apparatus (1) having connector means (1.6) comprising a video signal output terminal for providing a video signal to a first video signal path on the signal bus and comprising a control signal terminal (1.7) for conveying a digital control signal over the signal bus, the second apparatus (4) having connector means comprising a video signal input terminal (4.7) for receiving a video signal from said first video signal path on the signal bus and comprising a control signal terminal (4.9) for conveying a digital control signal over the signal bus, at least one of said apparatuses being capable of acting as an initiator and being adapted for initiating a message frame, comprising a start bit and message bits, that can be conveyed by said control signal over the signal bus and at least one other of said apparatuses being capable of acting as a responder and being adapted for responding to said message frame,
characterized in that said Initiator comprises means (1.4 or 4.6) for:
- testing whether the control signal is in the active state or in the passive state and initiating a message frame after the control signal has been in the passive state for at least a first predetermined period of time,
- generating a start bit (30) by pulling the control signal to the active state for a second period of time (T₂) indicative for the start bit, and releasing the control signal after said second period of time thereby allowing it to return to the passive state,
- verifying the state of the control signal (in Tₚ) after said second period of time,
- generating a message bit (DBᵢ) by producing a first or a second pulse shape in the control signal, said first pulse shape being produced such that it can be changed into the second pulse shape by the Responder,
and in that said Responder comprises means (4.6 or 1.4) for:
- validating a start bit by testing the control signal for being in the active state for a period of time corresponding to said second period of time,
- ignoring the rest of a message frame if the Responder failed to validate the start bit of said message frame,
- detecting a message bit (at t₃),
- converting a message bit by changing its pulse shape in the control signal from the first pulse shape, as produced by the Initiator, to the second pulse shape.

2. Video system as claimed in Claim 1, the connector means of the first apparatus (1) further comprising a video signal input terminal (1.5) for receiving a video signal from a second video signal path on the signal bus and the connector means of the second apparatus further comprising a video signal output terminal (4.8) for providing a video signal to said second video signal path on the signal bus, characterized in that said means (1.4 or 4.6) for generating a message bit are adapted for generating a first message bit (DIR) which indicates whether the message frame relates to the video signal on the first or on the second video signal path, and in that said Responder is adapted for responding to the message frame if that Responder either is in the process of generating a video signal and providing it to the indicated video signal path, or is in the process of receiving a video signal from the indicated video signal path for displaying, recording and/or further processing.

3. Video system as claimed in Claim 1 or 2, characterized in that said means (1.4 or 4.6) for generating a message bit are adapted for generating a second message bit (PAS) by producing the first or the second pulse shape in the control signal; the second pulse shape is produced if said Initiator comprises a video signal source and is in the process of providing the video signal from its video signal source to the video signal path, otherwise the first pulse shape is produced, and in that the Responder, if it comprises a video signal source, is adapted for converting said second message bit by changing its pulse shape in the control signal from the first pulse shape, as produced by the Initiator, to the second pulse shape if that Responder is in the process of providing the video signal from its video signal source to the video signal path.

4. Video system as claimed in Claim 1, 2 or 3, said Initiator and said Responder each comprising a video signal source (1.1,4.1), characterized in that said means for generating a message bit are adapted for generating a third message bit (NAS) indicating that the Initiator will soon start to provide the video signal from its video signal source to the video signal path, and in that said Responder is adapted for discontinuing the process of providing the video signal from its video signal source to the video signal path, in response to said third message bit.

5. Video system as claimed in Claim 1, 2, 3 or 4, characterized in that said means (1.4 or 4.6) for generating a message bit are adapted for generating a fourth message bit (DES) by producing the first or the second pulse shape in the control signal; the second pulse shape is produced if said Initiator is in the process of receiving the video signal from the video signal path for displaying, recording and/or further processing, otherwise the first pulse shape is produced, and in that the Responder is adapted for converting said fourth message bit by changing its pulse shape in the control signal from the first pulse shape, as produced by the Initiator, to the second pulse shape if that Responder is in the process of receiving the video signal from the video signal path for displaying, recording and/or further processing.

6. Video system as claimed in Claim 1, 2, 3, 4 or 5, characterized in that said means (1.4 or 4.6) for generating a message bit are adapted for generating a message bit string (QTY) representing a plurality of video signal types and comprising at least one fifth message bit, for establishing which of said plurality of video signal types can be handled by both the apparatus that provides a video signal from its video signal source to the video signal path and those video signal receiving apparatuses that display, record, and/or further process said video signal, the Initiator generating a fifth message bit by producing the first pulse shape in the control signal for a video signal type that it can handle and by producing the second pulse shape in the control signal for a type that it cannot handle, and in that said Responder is adapted for converting a fifth message bit which represents a video signal type that it cannot handle, by changing its pulse shape in the control signal from the first pulse shape, as produced by the Initiator, to the second pulse shape.

7. Video system as claimed in Claim 1, 2, 3, 4, 5 or 6, characterized in that said means (1.4 or 4.6) for detecting a message bit are adapted for sampling the control signal a third predetermined period of time after said control signal has changed from the passive state to the active state, and in that said means for generating a message bit are adapted for producing said first pulse shape by pulling the control signal to the active state for a period of time which is shorter than said third predetermined period of time, and for producing said second pulse shape by pulling the control signal to the active state for a period of time which is longer than said third predetermined period of time.

8. Apparatus (1 or 4) for initiating a message for conveying by a digital control signal over a signal bus, characterized in that said apparatus comprises means (1.4 or 4.6) for:
- testing whether the control signal is in an active state or in a passive state and initiating a message frame after the control signal has been in the passive state for at least a first predetermined period of time,
- generating a start bit (30) by pulling the control signal to the active state for a second period of time (T₂) indicative for the start bit, and releasing the control signal after said second period of time thereby allowing it to return to the passive state,
- verifying the state of the control signal (in Tₚ) after said second period of time,
- generating a message bit (DBᵢ) by producing a first or a second pulse shape in the control signal, said first pulse shape being produced such that it can be changed into the second pulse shape by a responding apparatus.

9. Apparatus (4 or 1) for responding to a message frame generated by an initiating apparatus and conveyed by a digital control signal over a signal bus, characterized in that said apparatus comprises means (4.6 or 1.4) for:
- validating a start bit by testing the control signal for being in an active state for a period of time corresponding to a second period of time,
- ignoring the rest of a message frame if it failed to validate the start bit of said message frame,
- detecting a message bit (at t₃),
- converting a message bit by changing its pulse shape in the control signal from a first pulse shape, as produced by the initiating apparatus, to a second pulse shape.

10. An apparatus as claimed in Claim 8 or 9, characterized in that means (1.4 or 4.6) is provided with a controller (22) and an input-output circuit, the input-output circuit comprising a first terminal (10) coupled to the control signal terminal comprised in the connector means of the apparatus, an input terminal (21) coupled to an output of the controller (22), and an output terminal (20) coupled to an input of the controller (22), the input-output circuit further comprises first low pass filter means (26) coupled between the input terminal (21) and the first terminal (10), and a diode (D) coupled between the first terminal (10) and a first point of constant potential (27).

11. The apparatus of Claim 10, characterized in that it further comprises a first amplifier (T₁,R₂) coupled between the input terminal (21) and the first terminal (10).

12. The apparatus of Claim 10 or 11 characterized in that it further comprises a zenerdiode coupled between the first terminal (10) and a second point of constant potential (earth).

13. The apparatus of Claim 10 or 11, characterized in that it further comprises second low pass filter means (28) coupled between the first terminal (10) and the output terminal (20).

14. The apparatus as claimed in Claim 10 or 11, characterized in that a second amplifier (T₂,R₆) is coupled between the first terminal (10) and the output terminal (20).

## Patentansprüche

1. Videosystem Videosystem mit einem ersten Gerät (1) und einem zweiten Gerät (4) und einem Signalbus, wobei das erste Gerät (1) Verbindungsmittel (1.6) aufweist, die eine Videosignalausgangklemme aufweisen zum Liefern eines Videosignals zu einer ersten Videosignalstrecke in dem Signalbus und die eine Steuersignalklemme (1.7) aufweisen zum Transportieren eines digitalen Steuersignals über den Signalbus, wobei das zweite Gerät (4) Verbindungsmittel aufweist, die eine Videosignaleingangsklemme (4.7) umfassen zum Empfangen eines Videosignals von der genannten ersten Videosignalstrecke im Signalbus und die eine Steuersignalklemme (4.9) umfassen zum Transportieren eines digitalen Steuersignals über den Signalbus, wobei wenigstens eines der genannten Geräte als Initiator wirksam ist und einen Nachrichtenrahmen auslösen kann, der ein Startbit und Nachrichtenbits aufweist, die von dem genannten Signal über den Signalbus transportiert werden können, und wobei wenigstens ein anderes der genannten Geräte als Responder wirksam ist um auf den genannten Nachrichtenrahmen zu reagieren,
dadurch gekennzeichnet, dass der genannte Initiator Mittel (1.4 oder 4.6) aufweist zum:
- Testen, ob das Steuersignal sich in dem aktiven Zustand oder in dem passiven Zustand befindet und zum Auslösen eines Nachrichtenrahmens nachdem das Steuersignal während wenigstens einer ersten vorbestimmten Zeitperiode in dem passiven Zustand gewesen ist,
- Erzeugen eines Startbits (30) dadurch, dass das Steuersignal eine zweite Zeitperiode (T₂), die indikativ ist für das Startbit, in den aktiven Zustand gezogen wird und dass das Steuersignal nach dieser Periode freigegeben wird, wodurch das Steuersignal in den passiven Zustand zurückkehren darf,
- Überprüfen des Zustandes des Steuersignals (in Tp) nach der genannten zweiten Zeitperiode,
- Erzeugen eines Nachrichtenbits (Dbᵢ) dadurch, dass eine erste oder eine zweite Impulsform in dem Steuersignal erzeugt wird, wobei diese erste Impulsform derart erzeugt wird, dass sie durch den Responder in die zweite Impulsform geändert werden kann,
und dass der genannte Responder Mittel (4.6 oder 1.4) aufweist zum:
- Gültigmachen eines Startbits dadurch, dass das Steuersignal darauf geprüft wird, ob es sich während einer Zeitperiode, entsprechend der genannten zweiten Zeitperiode, in dem aktiven Zustand befindet,
- Ignorieren des restlichen Teils des Nachrichtenrahmens, wenn der Responder das Startbit des genannten Nachrichtenrahmens nicht gültig gemacht hat,
- Detektieren eines Nachrichtenbits (zu dem Zeitpunkt t₃),
- Umwandeln eines Nachrichtenbits dadurch, dass dessen Impulsform in dem Steuersignal von der ersten Impulsform, wie diese vom Initiator erzeugt wurde, in die zweite Impulsform geändert wird.

2. Videosystem nach Anspruch 1, wobei die Verbindungsmittel des ersten Geräts (1) weiterhin eine Videosignaleingangsklemme (1.5) aufweisen zum Empfangen eines Videosignals von einer zweiten Videosignalstrecke in dem Signalbus und wobei die Verbindungsmittel des zweiten Geräts weiterhin eine Videosignalausgangsklemme (4.8) aufweisen zum Liefern eines Videosignals zu der genannten zweiten Videosignalstrecke im Signalbus, dadurch gekennzeichnet, dass die genannten Mittel (1.4 oder 4.6) zum Erzeugen eines Nachrichtenbits ein erstes Nachachrichtenbit (DIR) erzeugen, das angibt, ob der Nachrichtenrahmen eine Beziehung zu dem Videosignal in der ersten oder in der zweiten Videosignalstrecke hat, und dass der genannte Responder auf den Nachrichtenrahmen reagiert, wenn dieser Responder in der Erzeugung eines Videosignals begriffen ist und dieses der angegebenen Videosignalstrecke liefert, oder in dem Empfang eines Videosignals von der angegebenen Videosignalstrecke zur Wiedergabe, Aufzeichnung und/oder Weiterverarbeitting begriffen ist.

3. Videosystem nach Anspruch 1 oder 2, dadurch gekennzeichnet, dass die genannten Mittel (1.4 oder 4.6) zum Erzeugen eines Nachrichtenbits ein zweites Nachrichtenbit (PAS) erzeugen, indem die erste oder die zweite lmpulsform in dem Steuersignal gebildet wird; wobei die zweite Impulsform gebildet wird, wenn der genannte Initiator eine Videosignalquelle aufweist und ein Videosignal von dessen Videosignalquelle zu der Videosignalstrecke liefert, wobei sonst die erste Impulsform gebildet wird, und dass der Responder, wenn dieser eine Videosignalquelle aufweist, das genannte zweite Nachrichtenbit umsetzt durch Änderung dessen Impulsform in dem Steuersignal von der ersten Impulsform, wie diese von dem Initiator gebildet worden ist, in die zweite Impulsform, wenn dieser Responder das Videosignal von deren Videosignalquelle zu der Videosignalstrecke liefert.

4. Videosystem nach Anspruch 1, 2 oder 3, wobei der genannte Initiator und der genannte Responder je eine Videosignalquelle (1.1,4.1) aufweisen, dadurch gekennzeichnet, dass die genannten Mittel zum Erzeugen eines Nachrichtenbits ein drittes Nachrichtenbit (NAS) erzeugen, das angibt, dass der Initiator bald starten wird, das Videosignal von der Videosignalquelle zu der Videosignalstrecke zu liefern, und dass der genannte Responder den Prozess der Lieferung des Videosignals von der Videosignalquelle zu der Videosignalstrecke beendet, in Antwort auf das genannte dritte Nachrichtenbit.

5. Videosystem nach Anspruch 1, 2, 3 oder 4, dadurch gekennzeichnet, dass die genannten Mittel (1.4 oder 4.6) zum Erzeugen eines Nachrichtenbits ein viertes Nachrichtenbit (DES) dadurch erzeugen, dass die erste oder die zweite Impulsform in dem Steuersignal gebildet wird; wobei die zweite Impulsform erzeugt wird, wenn der genannte Initiator in dem Empfang des Videosignals von der Videosignalstrecke zur Wiedergabe, Aufzeichnung und/oder zur Weiterverarbeitung begriffen ist, wobei sonst die erste Impulsform gebildet wird, und dass der Responder das genannte vierte Nachrichtenbit durch Änderung der Impulsform in dem Steuersignal von der ersten Impulsform, wie diese von dem Initiator geliefert wird, in die zweite Impulsform umsetzt, wenn dieser Responder in dem Empfang des Videosignals von der Videosignalstrecke zur Wiedergabe, Aufzeichnung und/oder Weiterverarbeitung begriffen ist.

6. Videosystem nach Anspruch 1, 2, 3, 4 oder 5, dadurch gekennzeichnet, dass die genannten Mittel (1.4 oder 4.6) zum Erzeugen eines Nachrichtenbits eine Nachrichtenbitfolge (QTY) aufweisen, die eine Anzahl Videosignaltypen darstellt und wenigstens ein fünftes Nachrichtenbit aufweist, um zu ermitteln, welcher der genannten Anzahl Videosignaltypen von dem Gerät verarbeitet werden kann, das ein Videosignal von der Videosignalquelle zu der Videosignalstrecke schafft, und den das Videosignal empfangenen Geräten, die das genannte Videosignal wiedergeben, aufzeichnen und/oder weiter verarbeiten, wobei der Initiator ein füntes Nachrichtenbit erzeugt durch Bildung der ersten Impulsform in dem Steuersignal für einen Typ, den er nicht verarbeiten kann, und dass der genannte Responder ein fünftes Nachrichtenbit umwandelt, das einen Videosignaltyp darstellt, den er nicht verarbeiten kann, durch Änderung der Impulsform in dem Steuersignal von der ersten Impulsform, wie diese von dem Initiator erzeugt wird, in die zweite Impulsform.

7. Videosystem nach Anspruch 1, 2, 3, 4, 5 oder 6, dadurch gekennzeichnet, dass die genannten Mittel (1.4 oder 4.6) zum Detektieren eines Nachrichtenbits das Steuersignal während einer dritten vorbestimmten Zeitperiode abtasten, nachdem das genannte Steuersignal aus dem passiven Zustand in den aktiven Zustand gegangen ist, und dass die genannten Mittel zum Erzeugen eines Nachrichtenbits die genannte erste Impulsform dadurch bilden, dass das Steuersignal während einer Zeitperiode in den aktiven Zustand gezogen wird, die kürzer ist als die genannte dritte vorbestimmte Zeitperiode und die genannte zweite Impulsform dadurch bilden, dass das Steuersignal während einer Zeitperiode, die länger ist als die genannte dritte vorbestimmte Zeitperiode in den aktiven Zustand gezogen wird.

8. Gerät (1 oder 4) zum Auslösen einer Nachricht zum Transport durch ein digitales Steuersignal über einen Signalbus, dadurch gekennzeichnet, dass das genannte Gerät Mittel (1.4 oder 4.6) aufweist zum:
- Testen, ob das Steuersignal sich in einem aktiven Zustand oder in einem passiven Zustand befindet und zum Auslösen eines Nachrichtenrahmens nachdem das Steuersignal während wenigstens einer ersten vorbestimmten Zeitperiode (T₂) in dem passiven Zustand gewesen ist,
- Erzeugen eines Startbits (30) dadurch, dass das Steuersignal eine zweite Zeitperiode (T₂), die indikativ ist für das Startbit, in den aktiven Zustand gezogen wird und zum Freigeben des Steuersignals nach dieser Periode, wodurch das Steuersignal in den passiven Zustand zurückkehren darf,
- Überprüfen des Zustandes des Steuersignals (in Tₚ) nach der genannten zweiten Zeitperiode,
- Erzeugen eines Nachrichtenbits (Dbᵢ) dadurch, dass eine erste oder eine zweite Impulsform in dem Steuersignal erzeugt wird, wobei diese erste Impulsform derart erzeugt wird, dass sie durch einen Responder in die zweite Impulsform geändert werden kann.

9. Gerät (4 oder 1) zum Reagieren auf einen Nachrichtenrahmen, der von einem digitalen Steuersignal über einen Signalbur transportiert wird, dadurch gekennzeichnet, dass das genannte Gerät Mittel (4.6 oder 1.4) aufweist zum:
- Gültigmachen eines Startbits dadurch, dass das Steuersignal darauf geprüft wird, ob es sich während einer Zeitperiode, entsprechend der genannten zweiten Zeitperiode, die der ersten Periode folgt, in der das Steuersignal in dem passiven Zustand gewesen ist, in einem aktiven Zustand befindet,
- Ignorieren des restlichen Teils des Nachrichtenrahmens, wenn der Responder das Startbit des genannten Nachrichtenrahmens nicht gültig gemacht hat,
- Detektieren eines Nachrichtenbits (zu dem Zeitpunkt t₃),
- Umwandeln eines Nachrichtenbits dadurch, dass dessen Impulsform in dem Steuersignal von einer ersten Impulsform, wie diese vom Initiator erzeugt wurde, in eine zweite Impulsform geändert wird.

10. Gerät nach Anspruch 8 oder 9, dadurch gekennzeichnet, dass Mittel (1.4 oder 4.6) mit einem Kontroller (22) sowie mit einer Eingang-Ausgang-Schaltung versehen sind, wobei diese Eingang-Ausgang-Schaltung eine erste Klemme (10) aufweist, die mit der Steuersignalklemme in den Verbindungsmitteln des Geräts gekoppelt ist, wobei eine Eingangsklemme (21) mit einem Ausgang des Kontrollers (22) gekoppelt ist und wobei eine Ausgangsklemme (20) mit einem Eingang des Kontrollers (22) gekoppelt ist, wobei die Eingang-Ausgang-Schaltung weiterhin erste Tiefpaßfiltermittel (26) aufweist, die zwischen der Eingangsklemme (21) und der ersten Klemme (10) vorgesehen sind, und wobei eine Diode (D) zwischen der ersten Klemme (10) und einem ersten Punkr konstanten Potentials (27) vorgesehen ist.

11. Gerät nach Anspruch 10, dadurch gekennzeichnet, dass es weiterhin einen ersten Verstärker (T₁, R₂) aufweist, der zwischen der Eingangsklemme (21) und der ersten Klemme (10) vorgesehen ist.

12. Gerät nach Anspruch 10 oder 11, dadurch gekennzeichnet, dass es weiterhin eine Zener-Diode aufweist, die zwischen der ersten Klemme (10) und einem Punkt konstanten Potentials (Erde) vorgesehen ist.

13. Gerät nach Anspruch 10 oder 11, dadurch gekennzeichnet, dass es weiterhin zweite Tiefpaßfiltermittel (28) aufweist, die zwischen der ersten Klemme (10) und der Ausgangsklemme (20) vorgesehen sind.

14. Gerät nach Anspruch 10 oder 11, dadurch gekennzeichnet, dass ein zweiter Verstärker (T₂, R₆) zwischen der ersten Klemme (10) und der Ausgangsklemme (20) vorgesehen ist.

## Revendications

1. Système vidéo comprenant un premier appareil (1) et un deuxième appareil (4) et un bus de signal, le premier appareil (1) comportant un moyen de connexion (1.6) comprenant une borne de sortie de signal vidéo pour fournir un signal vidéo à un premier chemin de signal vidéo sur le bus de signal et comprenant une borne de signal de commande (1.7) pour transporter un signal de commande numérique par l'intermédiaire du bus de signal, le deuxième appareil (4) comportant un moyen de connexion comprenant une borne d'entrée de signal vidéo (4.7) pour recevoir un signal vidéo dudit premier chemin de signal vidéo sur le bus de signal et comprenant une borne de signal de commande (4.9) pour transporter un signal de commande numérique par l'intermédiaire du bus de signal, au moins un desdits appareils étant capable d'agir comme Initiateur et étant conçu pour initier une trame de message, comprenant un bit de début et des bits de message, qui peuvent être transportés par ledit signal de commande par l'intermédiaire dudit bus de signal, et au moins un autre desdits appareils étant capable d'agir comme Répondeur et étant conçu pour réagir à ladite trame de message, caractérisé en ce que ledit Initiateur comprend des moyens (1.4 ou 4.6) pour :
- vérifier si le signal de commande est dans l'état actif ou dans l'état passif et initier une trame de message après que le signal de commande est resté dans l'état passif pendant au moins une première période de temps prédéterminée,
- produire un bit de départ (30) en amenant le signal de commande dans l'état actif pendant une deuxième période de temps (T₂) indicatrice du bit de départ et libérer le signal de commande après ladite deuxième période de temps, lui permettant ce faisant de retourner à l'état passif,
- vérifier l'état du signal de commande (en Tp) après ladite deuxième période de temps,
- produire un bit message (DBᵢ) en produisant une première ou une deuxième forme d'impulsion dans le signal de commande, ladite première forme d'impulsion étant produite de telle façon qu'elle peut être changée en la deuxième forme d'impulsion par le Répondeur, et en ce que ledit Répondeur comprend des moyens (4.6 ou 1.4) pour :
- valider un bit de départ en vérifiant si le signal de commande se trouve dans l'état actif depuis une période de temps correspondant à ladite deuxième période de temps,
- ignorer le reste d'une trame de message si le Répondeur n'a pas validé le bit de départ de ladite trame de message,
- détecter un bit de message (en t₃),
- convertir un bit de message en faisant passer sa forme d'impulsion dans le signal de commande de la première forme d'impulsion, telle que produite par l'Initiateur, à la deuxième forme d'impulsion.

2. Système vidéo suivant la revendication 1, le moyen de connexion du premier appareil (1) comprenant en plus une borne d'entrée de signal vidéo (1.5) pour recevoir un signal vidéo d'un deuxième chemin de signal vidéo sur le bus de signal et le moyen de connexion du deuxième appareil comprenant en plus une borne de sortie de signal vidéo (4.8) pour fournir un signal vidéo audit deuxième chemin de signal vidéo sur le bus de signal, caractérisé en ce que lesdits moyens de génération d'un bit de message (1.4 ou 4.6) sont conçus pour produire un premier bit de message (DIR) qui indique si la trame de message concerne un signal vidéo sur le premier ou sur le deuxième chemin de signal vidéo, et en ce que ledit Répondeur est conçu pour réagir à la trame de message si ce Répondeur est soit sur le point de produire un signal vidéo et de le fournir au chemin de signal vidéo indiqué ou est sur le point de recevoir un signal vidéo du chemin de signal vidéo indiqué pour affichage, enregistrement et/ou autre traitement.

3. Système vidéo suivant la revendication 1 ou 2, caractérisé en ce que lesdits moyens de génération d'un bit de message (1.4 ou 4.6) sont conçus pour produire un deuxième bit de message (PAS) en produisant la première ou la deuxième forme d'impulsion dans le signal de commande; la deuxième forme d'impulsion est produite si ledit Initiateur comprend une source de signal vidéo et est sur le point de fournir ce signal vidéo de sa source de signal vidéo au chemin de signal vidéo, la première forme d'impulsion étant produite dans le cas contraire, et en ce que le Répondeur, s'il comprend une source de signal vidéo, est conçu pour convertir ledit deuxième bit de message en faisant passer sa forme d'impulsion dans le signal de commande de la première forme d'impulsion, telle que produite par l'Initiateur, à la deuxième forme d'impulsion si ce Répondeur est sur le point de fournir le signal vidéo de sa source de signal vidéo au chemin de signal vidéo.

4. Système vidéo suivant la revendication 1, 2 ou 3, ledit Initiateur et ledit Répondeur comprenant chacun une source de signal vidéo (1.1, 4.1), caractérisé en ce que lesdits moyens de génération d'un bit de message sont conçus pour produire un troisième bit de message (NAS) indiquant que l'Initiateur est sur le point de fournir le signal vidéo de sa source de signal vidéo au chemin de signal vidéo, et en ce que ledit Répondeur est conçu pour interrompre le processus de fourniture du signal vidéo de sa source de signal vidéo au chemin de signal vidéo en réaction audit troisième bit de message.

5. Système vidéo suivant la revendication 1, 2, 3 ou 4, caractérisé en ce que lesdits moyens de génération d'un bit de message (1.4 ou 4.6) sont conçus pour produire un quatrième bit de message (DES) en produisant la première ou la deuxième forme d'impulsion dans le signal de commande; la deuxième forme d'impulsion est produite si ledit Initiateur est sur le point de recevoir le signal vidéo du chemin de signal vidéo pour affichage, enregistrement et/ou autre traitement, la première forme d'impulsion étant produite dans le cas contraire, et en ce que le Répondeur est conçu pour convertir ledit quatrième bit de message en faisant passer sa forme d'impulsion dans le signal de commande de la première forme d'impulsion, telle que produite par l'Initiateur, à la deuxième forme d'impulsion si ce Répondeur est sur le point de recevoir le signal vidéo du chemin de signal vidéo (indiqué) pour affichage, enregistrement et/ou autre traitement.

6. Système vidéo suivant la revendication 1, 2, 3, 4 ou 5, caractérisé en ce que lesdits moyens de génération d'un bit de message (1.4 ou 4.6) sont conçus pour produire une chaîne de bits de message (QTY) représentant une pluralité de types de signaux vidéo et comprenant au moins un cinquième bit de message afin de déterminer lequel parmi la pluralité de types de signaux vidéo peut être traité à la fois par l'appareil qui fournit un signal vidéo de sa source de signal vidéo au chemin de signal vidéo et par les appareils recevant ce signal vidéo qui affichent, enregistrent et/ou traitent autrement ledit signal vidéo, l'Initiateur produisant un cinquième bit de message en produisant la première forme d'impulsion dans le signal de commande pour un type de signal vidéo qu'il peut traiter et produisant la deuxième forme d'impulsion dans le signal de commande pour un type de signal vidéo qu'il ne peut pas traiter, et en ce que le Répondeur est conçu pour convertir un cinquième bit de message qui représente un type de signal vidéo qu'il ne peut pas traiter, en faisant passer sa forme d'impulsion dans le signal de commande de la première forme d'impulsion, telle que produite par l'Initiateur, à la deuxième forme d'impulsion.

7. Système vidéo suivant la revendication 1, 2, 3, 4, 5 ou 6, caractérisé en ce que lesdits moyens (1.4 ou 4.6) de détection d'un bit de message sont conçus pour échantillonner le signal de commande au terme d'une troisième période de temps prédéterminée après que ledit signal de commande est passé de l'état passif à l'état actif et en ce que lesdits moyens de génération d'un bit de message sont conçus pour produire ladite première forme d'impulsion en amenant le signal de commande dans l'état actif pendant une période de temps qui est plus courte que ladite troisième période de temps prédéterminée et pour produire ladite deuxième forme d'impulsion en amenant le signal de commande dans l'état actif pendant une période de temps qui est plus longue que ladite troisième période de temps prédéterminée.

8. Appareil (1 ou 4) pour initier un message afin de transporter un signal de commande numérique sur un bus de signal, caractérisé en ce que ledit appareil comprend des moyens (1.4 ou 4.6) pour :
- vérifier si le signal de commande est dans un état actif ou dans un état passif et initier une trame de message après que le signal de commande est resté dans l'état passif pendant au moins une première période de temps prédéterminée,
- produire un bit de départ (30) en amenant le signal de commande dans l'état actif pendant une deuxième période de temps (T₂) indicatrice du bit de départ et libérer le signal de commande après ladite deuxième période de temps, lui permettant ce faisant de retourner à l'état passif,
- vérifier l'état du signal de commande (en Tₚ) après ladite deuxième période de temps,
- produire un bit de message (DBᵢ) en produisant une première ou une deuxième forme d'impulsion dans le signal de commande, ladite première forme d'impulsion étant produite de telle façon qu'elle puisse être changée en la deuxième forme d'impulsion par l'appareil Répondeur.

9. Appareil (4 ou 1) pour répondre à une trame de message transportée par un signal de commande numérique sur un bus de signal, caractérisé en ce que ledit appareil comprend des moyens (4.6 ou 1.4) pour :
- valider un bit de départ en vérifiant si le signal de commande se trouve dans un état actif depuis une période de temps correspondant à une deuxième période de temps,
- ignorer le reste d'une trame de message si le Répondeur n'a pas validé le bit de départ de ladite trame de message,
- détecter un bit de message (en t₃),
- convertir un bit de message en faisant passer sa forme d'impulsion dans le signal de commande d'une première forme d'impulsion, telle que produite par l'appareil Initiateur, à une deuxième forme d'impulsion.

10. Appareil suivant la revendication 8 ou 9, caractérisé en ce que le moyen (1.4 ou 4.6) est pourvu d'un contrôleur (22) et d'un circuit d'entrée-sortie, le circuit d'entrée-sortie comprenant une première borne (10) couplée à la borne de signal de commande comprise dans le moyen de connexion de l'appareil, une borne d'entrée (21) couplée à une sortie du contrôleur (22) et une borne de sortie (20) couplée à une entrée du contrôleur (22), le circuit d'entrée-sortie comprenant en outre un premier moyen formant filtre passe-bas (26) couplé entre la borne d'entrée (21) et la première borne (10) et une diode (D) couplée entre la première borne (10) et un premier point à potentiel constant (27).

11. Appareil suivant la revendication 10, caractérisé en ce qu'il comprend en outre un premier amplificateur (T₁, R₂) couplé entre la borne d'entrée (21) et la première borne (10).

12. Appareil suivant la revendication 10 ou 11, caractérisé en ce qu'il comprend en outre une diode Zener couplée entre la première borne (10) et un deuxième point à potentiel constant (masse).

13. Appareil suivant la revendication 10 ou 11, caractérisé en ce qu'il comprend en outre un deuxième moyen formant filtre passe-bas (28) couplé entre la première borne (10) et la borne de sortie (20).

14. Appareil suivant la revendication 10 ou 11, caractérisé en ce qu'un deuxième amplificateur (T₂, R₆) est couplé entre la première borne (10) et la borne de sortie (20).
